# EUROPEAN PATENT SPECIFICATION

(11) **EP 0 625 696 B1**
(45) Date of publication and mention of the grant of the patent: **25.03.1998**
(21) Application number: 94201270.9
(22) Date of filing: 06.05.1994
(51) Int. Cl.: G01G 19/08

(54) **A method and a system for weighing a load attached to a tractor**
Verfahren und Vorrichtung zum Wiegen einer mit einem Zugfahrzeug verbundenen Last
Procédé et système pour peser une charge associée à un véhicule tracteur

(30) Priority: 18.05.1993 NL 9300861
(43) Date of publication of application: 23.11.1994
(73) Proprietor: Trioliet Mullos B.V., NL-7581 HE Losser (NL)
(72) Inventor: Van der Plas, Nicolaas, NL-7576 WB Oldenzaal (NL)
(74) Representative: Louet Feisser, Arnold

(56) References cited:
- EP-A- 0 154 728
- EP-A- 0 218 299
- EP-A- 0 407 705
- EP-A- 0 496 166
- DE-A- 3 220 143
- DE-A- 3 629 244
- DE-A- 3 714 642
- LANDTECHNIK., vol.43, no.5, May 1988, HANNOVER DE pages 218 - 219 H.KNECHTGES 'Behälterwägung im dreipunktanbau'
- LANDTECHNIK.-SONDERHEFT, vol.44, 1989, LEHRTE DE pages 366 - 369 H.STANZEL 'Sensoren für neue traktorfunktionen'
- LANDTECHNIK., vol.43, no.10, October 1988, HANNOVER DE pages 414 - 418 H.AUERNHAMMER ET AL. 'Wiegemöglichkeiten in der Schlepperdreipunkthydraulik'

## Description

The invention relates to a method for weighing a device which is attached to the three-point linkage (or three-point hitch) of a tractor, whereby forces are measured which are exerted on the three-point linkage by the device.

A variety of devices may be attached to the three-point linkage of a tractor, which usually consists of two lifting arms and a top link, whereby it is important to determine what the weight of said device is. This may concern the weight of the device itself as well as the weight of any material present inside said device. Thus it may be important to determine how much fertilizer is present inside a fertilizer spreader or how much silage is present in a silage removing machine. Furthermore it may be important to determine the force which is exerted on the ground by a harrow. Such weights and forces may be readily determined when the weight of the device in the three-point linkage, both in empty condition and when filled with material, can be measured, which may or may not be done while the device is in operation.

A device which is attached to the three-point linkage of a tractor generally exerts a downward force, directed at an angle towards the tractor, on the two lower coupling points, that is on the lifting arms. Because the device is secured to the top link, in such manner as to be fully pivotable, in the upper coupling point, the force which the device exerts on the top link is directed coaxially with the top link, namely in a direction away from the tractor. In addition to that the direction of the top link is dependent on the dimensions of the device, the dimensions of the three-point hitch as well as on the extent to which the device is raised.

Landtechnik, vol. 43, No.5. May, '88, Hannover (DE), pp 218-219 (H. Knechtiges) provides general information on weighing systems attached to the three point linkage of a tractor and discloses the existence of built-on and integrated weighing systems.

From Landtechnik Vol. 43, no. 10, Oct. '88, Hannover (DE), pp. 414-418 (H. Auernhammer e.a.) it is known to integrate several types of sensors in various locations in the lifting arms and/or top link of a three-point linkage. The disadvantage of using sensors that are integrated in the lifting arms and/or top link in a method for weighing is that the measurements are either inaccurate due to deformation and play of the linkage and that the direction of measurement is related to the position of the lifting arms and/or top link of the linkage.

DE-A-3 714 642 discloses an integrated weighing system as disclosed in Landtechnik Vol 43, No. 10, Oct. '88, Hannover (DE), in which a sensor is placed on the top-link of the three-point linkage. The disadvantage of this system is that the direction of measurement is related to the position of the top-link.

From EP-A-0407705 it is known to integrate sensors in the connection bolts that connect the tractor-side frame and the device-side frame of a weighing system that is to be built-on between the three-point linkage of a tractor and an agricultural device. The disadvantage of using such a weighing device is that the distance between the tractor and the centre of gravity of the device is increased. Using such a weighing system for weighing heavy loads thus necessitates the use of a heavy tractor.

The object of the invention is to achieve a method, wherein the weight of the device can be determined in a relatively simple manner at any time by measuring the forces which are exerted on the three-point linkage by the device.

In order to accomplish this objective a component of the force which the device exerts on the two lower coupling points (lifting arms), or on one of said coupling points, is according to the invention as defined in method claim 1 and in apparatus claims 6, 13 and 14 measured in one predetermined direction by means of one or more sensors located in at least one lower coupling point. When measuring is carried out at only one of the coupling points, the measured value is doubled in order to determine the component being exerted on the two coupling points by approximation. Preferably this is the component in substantially vertical direction.

Such a component of the forces may be measured by using a sensor which measures the deflection of a securing pin in a certain direction, for example by means of strain gauges. Sensors of this type are commercially available. When it is ensured that the top link extends substantially horizontally when measuring takes place, the measured component will be equal to the weight of the device.

The component of the force which the device exerts on the top link may be measured in substantially the same direction, by means of a sensor in the upper coupling point (top link), and in order to determine the weight of the device the value of the measured component in the lower coupling points is added to the value of the measured component in the upper coupling point. Preferably the component is measured in substantially vertically downward direction, as a result of which the sum of the measured components is equal to the weight of the device. When the top link slopes upwards towards the rear relative to the tractor, the vertical component of the force which the device exerts on the top link will be directed upwards, so that the vertically downward component is negative. In order to the determine the weight of the device the measured negative value must be added to the measured value at the two lower coupling points, because the weight of the device is then smaller than the measured component at the said lower coupling points.

The angle between the plane in which the three coupling points lie and the vertical plane may be measured by means of an angle gauge, whereby the measured value is used to correct the measured weight of the device, so as to arrive at the actual weight. If the components of the respective forces are measured in the plane through the three coupling points, and the deviation of said plane from the vertical plane is not a minor one, it may be sensible to make a correction, and that in the sense that in order to arrive at the actual weight of the device, the measured value is increased dependent on the angle which said plane makes with the vertical. Angle gauges of this type, which measure the position relative to the vertical, are commercially available.

The measured component of the force which the device exerts on the two lower coupling points may be directed at such an angle relative to the vertical, that it extends substantially perpendicularly to the top link. By measuring the component in this direction it is not the actual weight of the device that is measured, but the component of the weight in the direction of measurement, because the device does not exert any force on the top link that has a component in the same direction. Consequently the measured value is directly proportional to the weight of the device. Because the angle which the measured component includes with the vertical is known, it is possible to determine the weight of the device. Further corrections may be made dependent on deviations from the situation described.

The force in the longitudinal direction of the top link may be measured by means of a sensor attached to the top link of the three-point linkage. Because the sensor is attached to the top link it will pivot along with the top link, so that measuring always takes place in the correct direction. If the device is attached to the three-point linkage in a certain position, the measured value will at all times be proportional to the weight of the device, so that the weight can be calculated. In case of deviations from the said position, which may for example be measured by an angle gauge provided on the device, further corrections may be made with regard to the measured value, if necessary.

An advantage of the system according to the invention is the absence of additional measuring instruments, such as an extra measuring frame provided between the three-point linkage and the device, which would result in the device being positioned further towards the rear.

In order to more fully explain the invention two embodiments of the invention will be described hereafter with reference to the drawing.
- Figure 1 shows a device wherein vertical components of forces are measured;
- Figure 2 shows a device wherein an oblique component is measured; and
- Figure 3 shows a device wherein measurements are only made in the top link.

The device in the embodiments consists of a fertilizer spreader provided with a hopper 1 and a rotatable blade wheel 2, which is capable of spreading fertilizer. The device is only diagrammatically shown in the Figures.

The Figures furthermore diagrammatically show the rear part of a tractor, which is provided with a power lift 3 comprising a three-point linkage. The power lift 3 is provided with two lifting arms 4 arranged in side-by-side relationship, which are driven simultaneously. In the Figures, which show side views, only one of the lifting arms 4 is visible, whereas the other arm is positioned at some distance from the illustrated arm 4.

A device attached to the three-point linkage of the power lift 3 may be lifted by pivoting of the lifting arms 4 about the pivot pin 5. At its end remote from the tractor the lifting arm 4 is connected to the device in such manner as to be pivotable about a horizontal pivot axis 6, for example by means of a connecting pin, which forms part of the device and which may be supported in a recess of the lifting arm. It is also possible to use a coupling rod interconnecting the two lower coupling points.

The power lift 3 is furthermore provided with a top link 7, which is attached to the power lift 3 in such manner as to be freely pivotable about a horizontal pivot axis 8, and which is at its other end connected to the device in such manner as to be capable of free pivoting motion about a horizontal pivot axis 9. The construction of the top link 7 may be such that its length is adjustable.

In the situation illustrated in the Figures the device, a fertilizer spreader in this case, has been lifted by the power lift to a position in which the fertilizer spreader can operate. The lifting arms 4 slope down towards the rear thereby, whilst the top link 7 slopes upwards towards the rear.

It may be desirable to determine the weight of the device, whether this is a fertilizer spreader or any other device, such as a feed hopper or a tillage machine which is attached to the three-point linkage. Furthermore it may be desirable to determine the weight of the fertilizer present inside the hopper of a fertilizer spreader or any other material present inside a device. The weight of the empty device may be measured separately for that purpose, after which said weight is deducted from the weight of the device as it is attached to the three-point linkage with a certain amount of material present therein.

It will be apparent that the weight of the device being supported by the power lift can be determined by means of the forces which the device exerts on the power lift. This is not a simple matter, however, because the forces which the device exerts on the power lift may vary in the upper suspension point 9 as well as in the lower suspension points 6, both with regard to their direction and with regard to their magnitude.

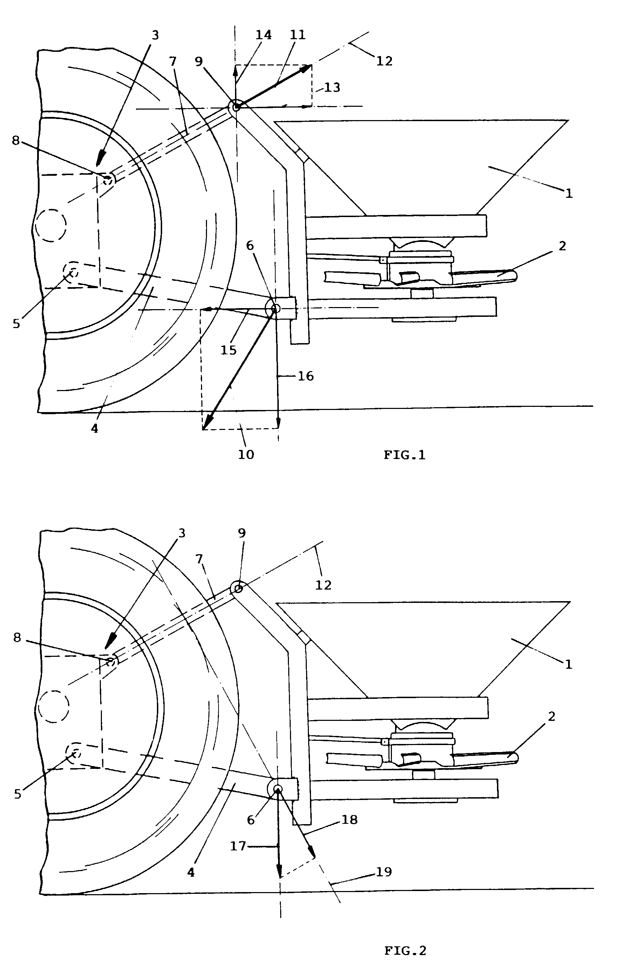

Figure 1 shows a method for determining the weight of the device by a measurement such that the effect of the directions of the forces which the device exerts on the power lift is compensated. In the embodiment the force which the device exerts on the power lift is measured in the pins secured to the power lift, which form the connection to the power lift in the pivot axis 6 (connection to the two lifting arms) and the pivot axis 9 (connection to the top link 7). These pins are secured in the device in a fixed position, whilst sensors are present inside said pins, which sensors measure the deflection of the pins in a predetermined plane, the vertical plane in this case. Pins provided with sensors of this type are commercially available, they are for example manufactured by Bosch GmbH of Germany.

In Figure 1 the force which the device exerts on the two lower lifting arms is indicated by the arrow 10, whilst the force which the device exerts on the top link is indicated by the arrow 11. Both the direction and the length of the arrows 10 and 11 are factors which are used in determining the forces. Because the device is attached to the top link 7 in such manner as to be freely pivotable, the direction of the force which the device exerts on the top link must be in line with the top link, as is indicated by the chain-dotted line 12. The force indicated by the arrow 11 may be resolved into two components, as is indicated in Figure 1, a horizontal component 13 and a vertical component 14.

A similar resolution into components of the force 10 which the device exerts on the lower lifting arms 4 is shown in Figure 1. The horizontal component is indicated by the arrow 15, and the vertical component is indicated by the arrow 16. As already said before, only the vertical components, that is the components which are indicated by the arrows 14 and 16, are measured in the embodiment of Figure 1. The weight of the device may then be determined by adding the vertically downward component that is measured in the upper suspension point to the vertically downward component in the lower suspension point. In the present embodiment the vertical component in the upper suspension point is directed upwards, so that this component is measured as a negative force and is consequently deducted from the vertical measured component in the lower suspension points.

When a device is being lifted by the power lift of a tractor the device will tilt to a certain extent, but frequently such a device has a predetermined operative position, so that the sensors which are meant to measure the vertical components of the forces can be fixed in the device in such a manner, that the component being measured is the vertical or nearly vertical component. If this is not the case, and the position in which the device is attached to the power lift may vary to a large degree, the device may be provided with a sensor which measures the angular position relative to the vertical. Sensors of this type are commercially available and may for example consist of a freely suspended pendulum, whose angular position relative to the device is measured. The result of such a measurement may be used to correct the measured force.

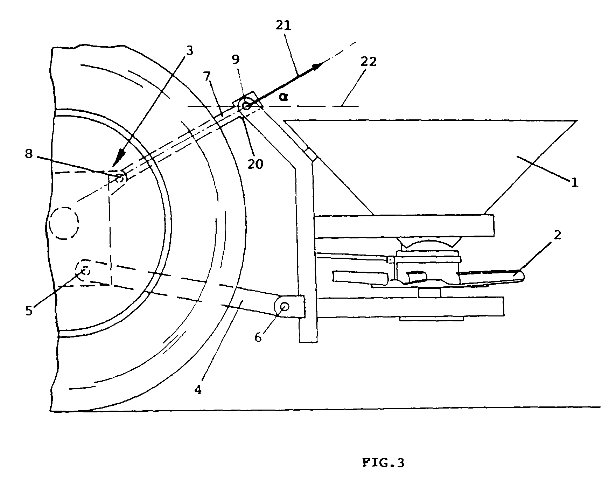

In the embodiment according to Figure 2 the sensors for measuring the component of the force are only provided in the two lower suspension points of the lifting arms 4 (or in one of said suspension points, whereby the measured value is doubled). The sensors are thereby secured in such a manner, that they measure a component 18, of the force which the device exerts on the lower lifting arms, which component 18 deviates from the vertical. By taking this oblique direction, indicated by the chain-dotted line 19 in Figure 2, in such a manner that it is substantially perpendicular to the direction of the top link, indicated by the chain-dotted line 12 in the Figure, a force is measured in the lower suspension points which is equal to the component of the resultant of all forces which the device exerts on the power lift. This is a consequence of the fact that the device cannot exert a force on the top link having a component perpendicular to the direction of the top link 7 as indicated by the dotted line 12. Dependent on the angle of the measured component 18 with the vertical, the measured force may be corrected in order to arrive at the actual weights of the device, as indicated by the arrow 17 in Figure 2.

It will be apparent that the embodiment shown in Figure 2 may be used in particular if a device is suspended in the power lift 3 in such a manner that the top link extends in approximately the same direction at all times.

It will be apparent that a highly accurate measurement may be achieved with the embodiments shown in Figure 1 and Figure 2 when the position of the device suspended in the power lift is precisely determined. In practice this is not very often the case. However, it has turned out that deviations of the position of the device, even up to an angular displacement of 5° and more, still allow a measurement which makes it possible to determine the weight of the device sufficiently accurately. An angular divergence of 5° results in a deviation from the measured value of about 1%, which is acceptable in practice.

In the embodiment according to Figure 3 a sensor 20 is positioned on the top link 7. The sensor 20 is connected to the top link 7 in such a manner, that the force 21 which the device exerts on the top link 7 is always measured, and that in the longitudinal direction of the top link. As is indicated in Figure 3, said force includes an angle α with the horizontal 22.

In a certain position of the device the measured force 21 is proportional to the weight of the device. This weight may be determined by means of the measured value and dependent on the angle α and the possible deviation from the vertical position of the device, which may both be measured with an angle gauge.

Of course the measured value or values may be converted into the weight of the device, by measuring with and without a calibration weight present on or in the device. The conversion factor may be derived from the difference between the two measurements.

The invention may be used in many ways, whereby always only components in a certain direction of the forces which the device exerts on the power lift of the tractor are measured. By fixedly connecting the sensors to the device the component of the force is always measured in the correct direction. The measurement in one of the lower suspension points may be omitted thereby, if it is assumed that the forces exerted on each lifting arm are approximately equal, which will be the case under certain circumstances. With the method and the system according to the invention not only the weight of the device can be measured, but for example also the force with which a device, for example a tillage device, which is attached in the three-point linkage of the tractor, is forced into the ground.

## Claims

1. Method for weighing a device (1, 2) which is attached to the three-point linkage (4, 7) of a tractor, which linkage (4, 7) comprises two lower lifting arms (4), each extending from the rear of the tractor towards a lower coupling point and a top-link (7) extending from the tractor towards an upper coupling point, in which method forces (10, 11) are measured which are exerted by said device (1, 2) on said three-point linkage by means of sensors, characterized in that in at least one lower coupling point a component (16) of the force (10) which said device (1, 2) exerts on said lower coupling point is measured in one predetermined direction by at least one sensor in said coupling point.

2. A method according to claim 1, characterized in that said direction is a substantially vertical direction.

3. A method according to claim 1 or 2, characterized in that also the component (14) of the force (11) which said device (1, 2) exerts on said top link (7) is measured in substantially the same direction by means of a sensor in said upper coupling point and that, in order to determine the weight of said device (1, 2), the value of the measured component in said lower coupling point is added to the value of the measured component (14) in said upper coupling point.

4. A method according to claim 1, characterized in that said direction is at an angle relative to the vertical and substantially perpendicular to the top link (7).

5. A method according to any one of the preceding claims, characterized in that the angle between the plane in which the three coupling points lie and the vertical plane is measured by means of an angle gauge, whereby the measured value is used to correct the measured weight of the device (1, 2), so as to arrive at the actual weight.

6. A system for weighing a device (1, 2) which is attached to the three-point linkage (4, 7) of a tractor, which linkage comprises two lower lifting arms (4), each extending from the rear of the tractor towards a lower coupling point and a top-link (7) extending towards an upper coupling point, said system being provided with means for measuring forces (10, 11) which are exerted on the three-point linkage (4, 7) by said device (1, 2), characterized in that said means comprise at least one sensor in at least one of said lower coupling points, said at least one sensor being arranged to measure a component (16) in one predetermined direction of the force (10) which said device (1, 2) exerts on said lower coupling point.

7. A system according to claim 6, characterized in that said direction is a substantially vertical direction.

8. A system according to claim 6 or 7, characterized in that said means furthermore comprise a sensor in said upper coupling point which sensor measures the component (14) of the force (11) which the device (1, 2) exerts on said upper coupling point in substantially the same, predetermined direction.

9. A system according to claim 6, characterized in that said sensor is designed such that the direction of the measured component (16) is substantially perpendicular to the top link (7).

10. A system according to any one of the claims 6 - 9, characterized in that a sensor is provided, which measures the angle between the plane through the three coupling points and the vertical plane.

11. A system according to any one of the claims 6 - 10, characterized in that said sensors are provided on the pins by which the device (1, 2) is suspended in the three-point linkage (4, 7), and that said sensors measure the deflection of said pins in a predetermined direction.

12. A system according to any one of the claims 6 - 11, characterized in that means are provided for calculating the weight of the device (1, 2) on the basis of the values measured by said sensors.

13. An agricultural device (1,2) which can be attached to the three-point linkage (4,7) of a tractor, which device comprises two lower coupling points, an upper coupling point and means for measuring forces (10,11) which are exerted on the coupling points by the three-point linkage (4,7) of said tractor characterized in that said means comprise at least one sensor in at least one of said lower coupling points of said device, for measuring a component (16) in one predetermined direction of the force (10) which said three-point linkage (4,7) of said tractor exerts on said lower coupling point of said device.

14. A tractor provided with a three-point linkage (4,7) which linkage comprises two lower lifting arms (4) each extending from the rear of the tractor towards a lower coupling point and a top-link (7) extending from the tractor towards an upper coupling point, which three-point linkage is provided with means for measuring forces (10,11) which are exerted on the three-point linkage (4,7), characterized in that said means comprise at least one sensor in at least one of said lower coupling points of said linkage for measuring a component (16) in one predetermined direction of the force (10) that is exerted on said lower coupling point.

## Patentansprüche

1. Verfahren zum Wiegen einer Vorrichtung (1, 2), die am Dreipunktanbau (4, 7) eines Traktors angebracht ist, wobei der Anbau (4, 7) zwei untere Hebearme (4) umfaßt, die sich jeweils von der Rückseite des Traktors auf einen unteren Kupplungspunkt zu erstrecken, sowie einen Oberlenker (7), der sich von dem Traktor aus auf einen oberen Kupplungspunkt zu erstreckt, wobei bei dem Verfahren Kräfte (10, 11), die von der Vorrichtung (1, 2) auf den Dreipunktanbau ausgeübt werden, mit Sensoren gemessen werden, **dadurch gekennzeichnet**, daß an wenigstens einem unteren Kupplungspunkt eine Komponente (16) der Kraft (10), die die Vorrichtung (1, 2) auf den unteren Kupplungspunkt ausübt, in einer vorgegebenen Richtung von wenigstens einem Sensor an dem Kupplungspunkt gemessen wird.

2. Verfahren nach Anspruch 1, **dadurch gekennzeichnet**, daß die Richtung eine im wesentlichen vertikale Richtung ist.

3. Verfahren nach Anspruch 1 oder 2, **dadurch gekennzeichnet**, daß auch die Komponente (14) der Kraft (11), die die Vorrichtung (1, 2) auf den Oberlenker (7) ausübt, in im wesentlichen der gleichen Richtung mittels eines Sensors an dem oberen Kupplungspunkt gemessen wird, und daß, um das Gewicht der Vorrichtung (1, 2) zu bestimmen, der Wert der an dem unteren Kupplungspunkt gemessenen Komponente zu dem Wert der an dem oberen Kupplungspunkt gemessenen Komponente (14) addiert wird.

4. Verfahren nach Anspruch 1, **dadurch gekennzeichnet**, daß die Richtung einen Winkel in Bezug zur Vertikalen bildet und im wesentlichen senkrecht zum Oberlenker (7) ist.

5. Verfahren nach einem der vorangehenden Ansprüche, **dadurch gekennzeichnet,** daß der Winkel zwischen der Ebene, in der die drei Kupplungspunkte liegen, und der vertikalen Ebene mittels einer Winkellehre gemessen wird, wobei der gemessene Wert genutzt wird, um das gemessene Gewicht der Vorrichtung (1, 2) zu korrigieren und so das tatsächliche Gewicht zu bestimmen.

6. System zum Wiegen einer Vorrichtung (1, 2), die am Dreipunktanbau (4, 7) eines Traktors angebracht ist, wobei der Anbau zwei untere Hebearme (4) umfaßt, die sich jeweils von der Rückseite des Traktors auf einen unteren Kupplungspunkt zu erstrecken, sowie einen Oberlenker (7), der sich auf einen oberen Kupplungspunkt zu erstreckt, wobei das System mit einer Einrichtung zum Messen von Kräften (10, 11) versehen ist, die von der Vorrichtung (1, 2) auf den Dreipunktanbau (4, 7) ausgeübt werden, **dadurch gekennzeichnet,** daß die Einrichtung wenigstens einen Sensor an wenigstens einem der unteren Kupplungspunkte umfaßt, wobei der wenigstens eine Sensor eine Komponente (16) der Kraft (10), die die Vorrichtung (1, 2) auf den unteren Kupplungspunkt ausübt, in einer vorgegebenen Richtung mißt.

7. System nach Anspruch 6, **dadurch gekennzeichnet,** daß die Richtung eine im wesentlichen vertikale Richtung ist.

8. System nach Anspruch 6 oder 7, **dadurch gekennzeichnet,** daß die Einrichtung weiterhin einen Sensor an dem oberen Kupplungspunkt umfaßt, wobei der Sensor die Komponente (14) der Kraft (11), die die Vorrichtung (1, 2) auf den oberen Kupplungspunkt ausübt, in der im wesentlichen gleichen vorgegebenen Richtung mißt.

9. System nach Anspruch 6, **dadurch gekennzeichnet,** daß der Sensor so aufgebaut ist, daß die Richtung der gemessenen Komponente (16) im wesentlichen senkrecht zu dem Oberlenker (7) ist.

10. System nach einem der Ansprüche 6 - 9, **dadurch gekennzeichnet,** daß ein Sensor vorhanden ist, der den Winkel zwischen der Ebene durch die drei Kupplungspunkte und der vertikalen Ebene mißt.

11. System nach einem der Ansprüche 6 - 10, **dadurch gekennzeichnet,** daß die Sensoren an den Bolzen vorhanden sind, mit denen die Vorrichtung (1, 2) an dem Dreipunktanbau (4, 7) aufgehängt ist, und daß die Sensoren die Krümmung der Bolzen in einer vorgegebenen Richtung messen.

12. System nach einem der Ansprüche 6 - 11, **dadurch gekennzeichnet,** daß eine Einrichtung zum Berechnen des Gewichtes der Vorrichtung (1, 2) auf der Basis der von den Sensoren gemessenen Werte vorhanden ist.

13. Landwirtschaftliche Vorrichtung (1, 2), die an dem Dreipunktanbau (4, 7) eines Traktors angebracht werden kann, wobei die Vorrichtung zwei untere Kupplungspunkte, einen oberen Kupplungspunkt und eine Einrichtung zum Messen von Kräften (10, 11) umfaßt, die auf die Kupplungspunkte durch den Dreipunktanbau (4, 7) des Traktors ausgeübt werden, **dadurch gekennzeichnet,** daß die Einrichtung wenigstens einen Sensor an wenigstens einem der unteren Kupplungspunkte der Vorrichtung umfaßt, der eine Komponente (16) der Kraft (10), die der Dreipunktanbau (4, 7) des Traktors auf den unteren Kupplungspunkt der Vorrichtung ausübt, in einer vorgegebenen Richtung mißt.

14. Traktor, der mit einem Dreipunktanbau (4, 7) versehen ist, wobei der Anbau zwei untere Hebearme (4) umfaßt, die sich jeweils von der Rückseite des Traktors auf einen unteren Kupplungspunkt zu erstrecken, und einen Oberlenker (7), der sich von dem Traktor auf einen oberen Kupplungspunkt zu erstreckt, wobei der Dreipunktanbau mit einer Einrichtung zum Messen von Kräften (10, 11) versehen ist, die auf den Dreipunktanbau (4, 7) ausgeübt werden, **dadurch gekennzeichnet,** daß die Einrichtung wenigstens einen Sensor an wenigstens einem der unteren Kupplungspunkte des Anbaus umfaßt, der eine Komponente (16) der Kraft (10), die auf den unteren Kupplungspunkt ausgeübt wird, in einer vorgegebenen Richtung mißt.

## Revendications

1. Procédé pour peser un dispositif (1, 2) fixé à l'attelage à trois points (4, 7) d'un tracteur, lequel attelage (4, 7) est constitué de deux bras de relevage (4), qui s'étendent chacun depuis l'arrière du tracteur, en direction d'un point d'accouplement inférieur, et d'une bielle supérieure (7), qui s'étend depuis le tracteur, en direction d'un point d'accouplement supérieur, procédé dans lequel on mesure, au moyen de capteurs, les forces (10, 11) exercées par ledit dispositif (1, 2) sur ledit attelage à trois points, caractérisé en ce que l'on mesure, au niveau d'au moins l'un des points d'accouplement inférieurs, une composante (16) de la force (10) exercée par ledit dispositif (1, 2) sur ledit point d'accouplement inférieur, dans une direction prédéterminée, à l'aide d'au moins un capteur disposé au niveau dudit point d'accouplement.

2. Un procédé selon la revendication 1, caractérisé en ce que ladite direction est une direction sensiblement verticale.

3. Un procédé selon la revendication 1 ou 2, caractérisé en ce que l'on mesure également la composante (14) de la force (11) exercée par ledit dispositif (1, 2) sur ladite bielle supérieure (7), dans sensiblement la même direction, au moyen d'un capteur disposé au niveau du point d'accouplement supérieur, et en ce que, afin de déterminer le poids dudit dispositif (1, 2), on ajoute la valeur de la composante mesurée au niveau dudit point d'accouplement inférieur à la valeur de la composante (14) mesurée au niveau dudit point d'accouplement supérieur.

4. Un procédé selon la revendication 1, caractérisé en ce.que ladite direction est inclinée d'un certain angle par rapport à la verticale, et est sensiblement perpendiculaire à la bielle supérieure (7).

5. Un procédé selon l'une quelconque des revendications précédentes, caractérisé en ce que l'angle entre le plan dans lequel se trouvent les trois points d'accouplement et le plan vertical est mesuré au moyen d'un organe de mesure d'angle, de telle sorte que la valeur mesurée soit utilisée pour corriger le poids mesuré du dispositif (1, 2), pour obtenir le poids réel.

6. Un système pour peser un dispositif (1, 2) fixé à l'attelage à trois points (4, 7) d'un tracteur, lequel attelage (4, 7) est constitué de deux bras de relevage (4), qui s'étendent chacun depuis l'arrière du tracteur, en direction d'un point d'accouplement inférieur, et d'une bielle supérieure (7), qui s'étend vers un point d'accouplement supérieur, ledit système comportant des moyens permettant de mesurer les forces (10, 11) exercées par ledit dispositif (1, 2) sur l'attelage à trois points (4, 7), caractérisé en ce que lesdits moyens comprennent au moins un capteur disposé au niveau d'au moins l'un desdits points d'accouplement inférieurs, ledit au moins un capteur étant disposé de manière à mesurer une composante (16) dans une direction prédéterminée de la force (10) exercée par ledit dispositif (1, 2) sur ledit point d'accouplement inférieur.

7. Un système selon la revendication 6, caractérisé en ce que ladite direction est une direction sensiblement verticale.

8. Un système selon la revendication 6 ou 7, caractérisé en ce que lesdits moyens comprennent en outre un capteur disposé au niveau dudit point d'accouplement supérieur, lequel capteur mesure la composante (14) de la force (11) exercée par le dispositif (1, 2) sur ledit point d'accouplement supérieur, dans sensiblement la même direction prédéterminée.

9. Un système selon la revendication 6, caractérisé en ce que ledit capteur est conçu de telle sorte que la direction de la composante mesurée (16) soit sensiblement perpendiculaire à la bielle supérieure (7).

10. Un système selon l'une quelconque des revendications 6 à 9, caractérisé en ce qu'il est prévu un capteur qui mesure l'angle entre le plan passant par les trois points d'accouplement et le plan vertical.

11. Un système selon l'une quelconque des revendications 6 à 10, caractérisé en ce que lesdits capteurs sont disposés sur les broches grâce auxquelles le dispositif (1, 2) est suspendu à l'attelage à trois points (4, 7), et en ce que lesdits capteurs mesurent la flexion desdites broches dans une direction prédéterminée.

12. Un système selon l'une quelconque des revendications 6 à 11, caractérisé en ce qu'il est prévu des moyens pour calculer le poids du dispositif (1, 2), en fonction des valeurs mesurées par lesdits capteurs.

13. Un dispositif agricole (1, 2) qui peut être fixé à l'attelage à trois points (4, 7) d'un tracteur, lequel dispositif comprend deux points d'accouplement inférieurs, un point d'accouplement supérieur et des moyens permettant de mesurer les forces (10, 11) exercées sur les points d'accouplement par l'attelage à trois points (4, 7) dudit tracteur, caractérisé en ce que lesdits moyens comprennent au moins un capteur disposé au niveau d'au moins l'un des points d'accouplement inférieurs dudit dispositif, pour mesurer une composante (16), dans une direction prédéterminée, de la force (10) exercée par ledit attelage à trois points (4, 7) dudit tracteur sur ledit point d'accouplement inférieur dudit dispositif.

14. Un tracteur muni d'un attelage à trois points (4, 7), lequel attelage est constitué de deux bras de relevage (4), qui s'étendent chacun depuis l'arrière du tracteur, en direction d'un point d'accouplement inférieur, et une bielle supérieure (7), qui s'étend depuis le tracteur, en direction d'un point d'accouplement supérieur, lequel attelage à trois points comporte des moyens permettant de mesurer les forces (10, 11) qui s'exercent sur l'attelage à trois points (4, 7), caractérisé en ce que lesdits moyens comprennent au moins un capteur disposé au niveau d'au moins l'un desdits points d'accouplement inférieurs dudit attelage, pour mesurer une composante (16), dans une direction prédéterminée de la force (10) qui s'exerce sur ledit point d'accouplement inférieur.
